# FASCICULE DE BREVET EUROPEEN

(11) **EP 1 803 061 B1**
(45) Date de publication et mention de la délivrance du brevet: **30.12.2009**
(21) Numéro de dépôt: 05798094.8
(22) Date de dépôt: 14.10.2005
(51) Int. Cl.: G06F 9/38, G06F 15/80, G06F 15/78

(54) **SYSTEME DE PROCESSEUR PARALLELE RECONFIGURABLE, MODULAIRE ET HIERARCHIQUE**
UMKONFIGURIERBARES, MODULARES, HIERARCHISCHES PARALLELPROZESSORSYSTEM
RECONFIGURABLE, MODULAR AND HIERARCHICAL PARALLEL PROCESSOR SYSTEM

(30) Priorité: 18.10.2004 FR 0411020
(43) Date de publication de la demande: 04.07.2007
(73) Titulaire: IDARCA INC., Sainte Marie, QC G6E 1L1 (CA)
(72) Inventeur: GUILMETTE, Pierre, G6E 3A7 Sainte-Marie. Québec (CA); GLORIES, Serge, B-3620 Lanaken (BE)
(74) Mandataire: de Zeeuw, Johan Diederick
(86) Numéro de dépôt international: PCT/EP2005/011169
(87) Numéro de publication internationale: WO 2006/042736

(56) Documents cités:
- WO-A-02/084510
- WO-A-02/103518
- US-A1- 2002 029 330
- US-A1- 2003 154 357
- ARNALDO OLIVEIRA ET AL: "Specification, Implementation and Testing of HFSMs in Dynamically Reconfigurable FPGAs" LECTURE NOTES IN COMPUTER SCIENCE, 1999, pages 313-322, XP019000743
- KUNDU S: "Modeling complex systems by a set of interacting finite-state models" SOFTWARE ENGINEERING CONFERENCE, 2003. TENTH ASIA-PACIFIC 10-12 DEC. 2003, PISCATAWAY, NJ, USA,IEEE, 10 décembre 2003 (2003-12-10), pages 380-389, XP010674427 ISBN: 0-7695-2011-1
- GIRAULT A ET AL: "Hierarchical finite state machines with multiple concurrency models" IEEE TRANSACTIONS ON COMPUTER-AIDED DESIGN OF INTEGRATED CIRCUITS AND SYSTEMS IEEE USA, vol. 18, no. 6, juin 1999 (1999-06), pages 742-760, XP002361999 ISSN: 0278-0070
- BINGFENG MEI ET AL: "Design methodology for a tightly coupled WLIW/reconfigurable matrix architecture: a case study" DESIGN, AUTOMATION AND TEST IN EUROPE CONFERENCE AND EXHIBITION, 2004. PROCEEDINGS FEB. 16-20, 2004, PISCATAWAY, NJ, USA,IEEE, vol. 2, 16 février 2004 (2004-02-16), pages 1224-1229, XP010684826 ISBN: 0-7695-2085-5
- SIEMERS C ET AL: "The >S<puter: a novel microarchitecture model for execution inside superscalar and VLIW processors using reconfigurable hardware" COMPUTER ARCHITECTURE. PROCEEDINGS OF THE AUSTRALASIAN COMPUTER ARCHITECTURE CONFERENCE ACAC, 1998, pages 169-178, XP002126704

## Description

### Domaine de l'invention

La présente invention est relative à un système de processeur parallèle de structure reconfigurable et hiérarchique.

### Arrière-plan de l'invention

Le fonctionnement séquentiel de la majorité des processeurs actuels comporte l'avantage d'une économie des ressources (portes logiques) au prix d'une réduction des performances directement liée au fait que les opérations se font en succession, de ce fait les processeurs séquentiels doivent aller aux limites de vitesses et d'intégration des circuits intégrés. De la même manière la lecture des instructions d'opérations (code) doit se faire séquentiellement sur des mots d'instructions de plus en plus longs, ce qui se prête mal à l'introduction de processus parallèles à moins de comporter des mots de 128, 256 bits ou plus.
En pratique les processeurs actuels peuvent supporter des structures de programmes qui ont l'apparence de parallélisme, cela en réalisant une structure multitâche d'exécution, Toutefois une telle structure ne permet pas une réelle simultanéité et est lourde. En particulier le multitâche requiert une gestion supplémentaire par le processeur, rendue nécessaire pour partager les priorités entre les différentes tâches ; une telle lourdeur a des conséquences : plus grande capacité de mémoires requise (allocation de blocs de mémoire par tâche), diminution des performances causée par le fait qu'une partie des ressources est dédiée à la gestion des tâches.

Certains systèmes introduisent des processeurs multiples inters reliés dans un environnement commun où ils partagent des ressources et des données. Cette architecture quoique plus performante que celle ayant un seul processeur a l'inconvénient d'être coûteuse en composantes d'interfaces et est limité dans ses performances par la capacité d'échange des données dans un bus commun.

L'introduction de parallélisme est à priori coûteuse, des systèmes l'ont introduit et nécessitent d'importantes ressources. Ces systèmes sont dans une large mesure très performants au prix d'un manque de flexibilité et d'un gaspillage des ressources en ce qu'une large part des fonctions n'est pas utilisée dans leur plein potentiel. En l'occurrence un processeur parallèle doit profiter de nouvelles structures permettant l'allocation dynamique des ressources et un échange de données efficace et économique entre les ressources.

Dans les brevets français no.2 783 630 déposé le 23 septembre 1998 et américain no. 6,137,044 soumis le 23 septembre 1999 et émis le 24 octobre 2000 , le concept de cellule est introduit dans un système de parallélisation de signaux sonore où les éléments de calculs sont partagés entre des cellules, où ces cellules sont inters reliées sur leurs entrées-sorties par des liens programmables. Les ressources quoique partagées (nombreuses opérations parallèles utilisées séquentiellement) peuvent être regroupés et une architecture peut incorporer plusieurs de ces groupes ayant leurs propres ressources en parallèle tout en pouvant être liés de manière programmable. Ce brevet introduit des moyens pour rendre ces liens programmables, il est pleinement modulaire. L'architecture décrite dans le brevet cité plus haut est élaborée autour du concept de cellules utilisant en partage des ressources de calcul et présente des solutions dans le domaine de signal et temporel (mode récursif) alors qu'elle peut tout autant offrir des solutions dans le domaine plus général de machines de calcul et de traitement de données (mode non récursif).

La demande de brevet WO02/084510 introduit un système de processeur modulaire et reconfigurable, qui aussi est basé sur un concept de cellule.

Par conséquent, il reste une grande place pour des méthodes et des systèmes permettant de résoudre les principales limitations des processeurs existants et de généraliser un traitement parallèle à tout type de données et de signaux.

### Sommaire de l'invention

La présente invention est définie dans les revendications annexées.

La présente invention introduit les fonctionnalités d'un processeur parallèle dont les éléments sont configurables et reconfigurables en temps réel et dynamiquement. Les ressources de traitement et de calcul sont utilisées par chaque cellule indépendamment avec ou sans partage. Les données d'entrées des cellules sont liés à des registres dont les valeurs proviennent de variables ou de résultats de calculs d'autre ressources. Les cellules sont regroupées dans des Blocs de premier niveau. Ces blocs peuvent être à leur tour regroupés, et ainsi de suite. Une machine à états commande le fonctionnement de chaque groupe de niveau 1 ou supérieur, suivant un programme et au besoin reconfigurable suivant des résultats choisis Les blocs de niveau 1 comportent des accumulateurs en sorties multiples qui permettent la redirection dynamique des données partielles des sorties de cellules, ces accumulateurs permettent les calculs croisés avec indexation programmable. Le niveau supérieur intègre l'ensemble des niveaux et contient aussi un macro machine à états qui gère le fonctionnement des sous-ensembles. En l'occurrence le processeur est constitué d'éléments hiérarchiques sur plusieurs niveaux, le niveau élémentaire constitue la cellule ; cette hiérarchisation permet une communication de données sur des calculs simples (bas niveau) et sur des blocs de calculs (niveaux plus élevés).

Cette structure est pleinement parallèle et entièrement reconfigurable dynamiquement sur des données externes ou en fonction de résultats obtenus.

Le système de processeur modulaire est basé sur une architecture hiérarchique permettant d'effectuer des traitements et des calculs sur des données en mémoire afin d'obtenir des données, ledit système comprend des moyens d'effectuer des opérations arithmétiques, logiques, mémorisation de manière parallèle en utilisant des ressources dans une structure adaptée et reconfigurable comportant des opérateurs regroupés et disposés en tout ou en partie autour d'un ensemble de cellules, disponibles en temps partagé ou prédéterminés de manière flexible en toutes combinaisons, elles-mêmes regroupées dans des blocs, à l'intérieur desquels cellules et blocs les données sont échangeables de manière programmable, de sorte que les traitements peuvent être effectués de manière indépendantes et simultanées en utilisant les ressources configurées dynamiquement au besoin.

Avantageusement, le système est **caractérisé en ce que** l'acheminement des données en entrées et sorties puisse se faire de manière dynamique et indépendante sur chaque entrée, sortie et ressource de calcul et ce à partir de valeurs déterminées en mémoires prédéfinies correspondant aux liens entre les sources et les destinations.

Avantageusement, le système est **caractérisé en ce que** les différents liens de données tiennent compte de la synchronisation de manière à compenser pour les délais entre les différentes d'entrées pour chaque ressource comportant plusieurs entrées comme les opérateurs, les cellules et les blocs de cellules.

Avantageusement, le système est **caractérisé en ce que** les données entrantes sont dirigées de manière dynamique vers les groupes d'opérateurs à partir d'un processeur externe, ou d'interfaces d'entrées provenant de dispositifs externes, l'acheminement des données vers les groupes pouvant être reconfiguré dynamiquement selon les besoins.

Avantageusement, le système est **caractérisé en ce que** les données sortantes soient transmises à des mémoires ou à des dispositifs externes ou des interfaces de sorties.

Avantageusement, le système est **caractérisé en ce que** les dits moyens d'effectuer des traitements arithmétiques ou logiques ou de mémorisation sur des opérateurs incorporés dans des cellules comprennent :
- un circuit de configuration des entrées des différents opérateurs logiques et arithmétiques regroupés en blocs, partagés sur des cellules et accessibles sur des cellules choisies dynamiquement;
- un circuit de configuration des entrées des différents opérateurs logiques et arithmétiques en partie assignés de manière fixes à des cellules selon les besoins de configuration et alternativement à des configurations d'opérateurs partagés,
- un circuit indépendant de sélection de provenance de chaque entrée pour chaque entrée de chaque opérateur ;
- un circuit de saisie des données de sorties sous forme d'accumulateurs comportant des bascules dont la synchronisation est paramétrable indépendamment ;
- un circuit de synchronisation sous forme de compteurs programmables permettant de commander des séquences utilisables sur les différents niveaux de traitement, au besoin et de manière indépendamment configurable pour chaque élément;
- un circuit de commande de mémorisation pour les opérateurs de type mémoires ;
- un circuit de calcul logique et arithmétique pour les opérateurs de type calcul, comparaison ou décision ;
- un circuit de retard au moyen de bascules pour synchroniser de manière adéquate les entrées d'opérateurs pour chaque entrée de manière indépendante ;
- un circuit de regroupement des opérateurs en cellules comportant des registres de configuration donnant les liens de connexions pour chaque entrée d'opérateur, les modes de synchronisation, la direction des sorties, les connexions entre les opérateurs d'une cellule, les connexions entre les cellules, les connexions externes aux cellules.

Dans le système de traitement de données en un ou plusieurs niveaux, la commande est effectuée par des processus de type processeur-contrôleur ou de machines à états sur chaque niveau et où les niveaux supérieurs ordonnent les opérations sur les niveaux inférieurs et ces commandes déterminent dynamiquement les modes de calculs et d'opérations de chaque ressource ainsi que les liens de données entre les différentes ressources.

Avantageusement, le circuit de sélection de provenance des entrées sur chaque niveau en l'occurrence les liens en plusieurs niveaux, comprend :
- un circuit de sélection de provenance des entrées des opérateurs notamment des fonctions arithmétiques, logiques, mémoires ; lequel circuit permet d'acheminer des sorties d'autres éléments que ce soit d'autres opérateurs, des cellules, des regroupements (dans la description des blocs de niveau 1 ou autres), des compteurs programmables ou d'autres éléments du circuit, des données directes ; vers une ou l'autre entrée de chaque opérateur et ce de manière indépendante pour chaque entrée de chaque opérateur ;
- un circuit de sélection de provenance des entrées des cellules ; lequel circuit permet d'acheminer des sorties d'autres éléments que ce soit, des cellules, des regroupements (dans la description des blocs de niveau 1 ou autres) ou d'accumulateurs sélectifs de regroupement, des compteurs programmables , d' opérateurs ou d'autres éléments de circuit, des données directes ; vers une ou l'autre entrée de chaque cellule et ce de manière indépendante pour chaque entrée de chaque cellule ;
- un circuit de sélection de provenance des entrées des regroupements de cellules nommément des blocs de niveau 1 ou des blocs de niveaux supérieurs incorporant des blocs de niveau inférieur ; lequel circuit permet d'acheminer des sorties d'autres éléments que ce soit, des cellules, des regroupements (dans la description des blocs de niveau 1 ou autres) ou d'accumulateurs sélectifs de regroupement, des compteurs programmables , d' opérateurs ou d'autres éléments de circuit, des données directes ; vers une ou autre entrée de chaque regroupement et ce de manière indépendante pour chaque entrée de chaque regroupement . Avantageusement,le circuit de cellules permet de grouper des éléments de calculs ou de traitement comprenant :

- des opérateurs arithmétiques, logiques ou des mémoires ;
- un circuit de sélection des liens entre les éléments de la cellule sur les entrées et sorties ;
- un circuit de sélection des liens externes à la cellule permettant de relier différentes entrées ou sorties de cellules, d'opérateurs, d'accumulateurs de cellules, de groupes de cellules ou d'entrées directes.

Avantageusement,le circuit de commande de processus des cellules comprend:
- des compteurs programmables ;
- des commandes de compteurs pour les valeurs de départ, de fin et d'incrémentation/décrémentation ;
- des commandes de compteurs pour l'activation du comptage, la mise à zéro, le chargement des valeurs de programmation et la direction de comptage.

Avantageusement,le circuit d'accumulation sélective des entrées des cellules comprend:
- des sorties d' éléments à sélectionner dont des sorties d'autres cellules, des sorties de groupes de cellules, des sorties d'accumulateurs de groupes de cellules, des sorties d'opérateurs et autres ;
- un circuit de sélection des entrées à partir de registres programmés ou de machines à états programmées, ou autres.

Avantageusement,le circuit de regroupement de cellules permet de grouper des cellules comprenant :
- des opérateurs arithmétiques, logiques ou des mémoires disponibles pour recevoir des données de cellules ou d'autres provenances, calculer et acheminer des résultats à d'autres cellules;
- un circuit de sélection des liens entre les cellules sur les entrées et sorties ;
- un circuit de sélection des liens externes au groupe permettant de relier différentes entrées ou sorties de cellules, d'opérateurs, d'accumulateurs de cellules, de groupes de cellules ou d'entrées directes.

Avantageusement,le circuit de commande de processus des regroupements de cellules comprend:
- des compteurs programmables ;
- des commandes de compteurs pour les valeurs de départ, de fin et d'incrémentation/décrémentation ;
- des commandes de compteurs pour l'activation du comptage, la mise à zéro, le chargement des valeurs de programmation et la direction de comptage.

Le circuit d'accumulation sélective des sorties des cellules comprend:
- des sorties de cellules mémorisées ;
- un circuit de sélection programmable permettant de choisir les valeurs de cellules à additionner sur un cycle d'horloge donné ;
- un circuit de commande de sélection des valeurs à partir de compteurs ou de machines à états programmables faisant la commande du circuit de sélection des cellules à additionner sur un cycle donné ;
- un circuit de sélection programmable permettant de choisir les accumulateurs de cellules sur un cycle d'horloge donné ;
- un circuit de commande de sélection des valeurs à partir de compteurs ou de machines à états programmables faisant la commande du circuit de sélection des accumulateurs sur un cycle donné ;
- un additionneur parallèle des valeurs des cellules avec sélection des entrées par le circuit de sélection des sorties de cellules à additionner sur un cycle choisi;
- des mémoires commandées sélectivement pour prendre les valeurs additionnées sur un cycle choisi
- des mémoires commandées cycliquement permettant de synchroniser les sorties des mémoires sélectionnées sur des cycles choisis et transmis sur d'autres cycles.

### Description des figures

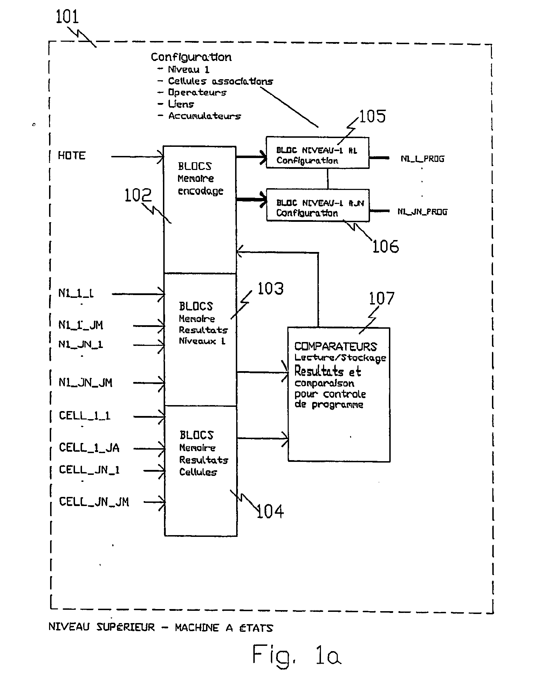

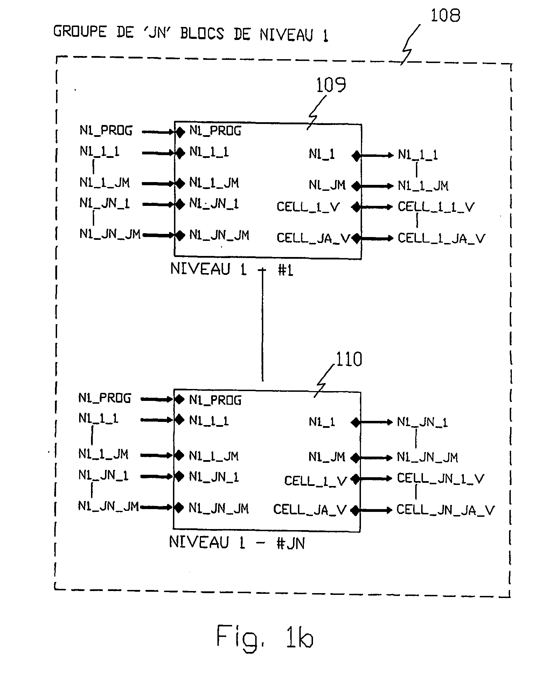

Les figures représentent une structure en 3 niveaux : Niveau supérieur, Niveau 1, Cellules. L'architecture ne se limite toutefois pas à ce nombre de niveaux elle peut tout autant se présenter sur un plus ou moins grand nombre de niveaux que 3. La figure 1 (1a, 1b) représente le niveau supérieur de l'architecture, il contient notamment la première machine à états qui commande l'ensemble de l'architecture et les Blocs de Niveau 1.

La figure 2 (2a, 2b, 2c) représente les éléments d'un bloc de Niveau 1 illustré dans la figure 1, qui comporte sa propre machine à états - supervisé par la première machine à états, ses registres de configuration, les commandes de processus, les cellules du bloc, les opérateurs et l'accumulateur à sortie multiples. Il constitue un ensemble d'un ou plusieurs calculs effectué(s) sur les cellules.

La figure 3 (3a, 3b, 3c) représente les éléments d'une cellule illustrée dans la figure 2, comportant notamment, les registres de configuration, les commandes de processus, l'accumulateur d'entrée dont les données sont acheminées sélectivement sur les opérateurs, les sélecteurs d'opérateurs et l'accumulateur de sortie de la cellule.

La figure 4 représente en détails la commande de processus d'un bloc de niveau 1 illustrée dans la figure 2.

La figure 5 représente en détails l'accumulateur de sortie multiples des cellules, illustré dans la figure 2, comportant la synchronisation de sorties provenant de chaque cellule combinées (additionneur 501) et dirigées sélectivement vers une ou plusieurs sorties.

La figure 6 représente en détails la commande de processus d'une cellule, illustrée dans la figure 3, comportant des compteurs programmables dont les valeurs peuvent être utilisées dans les commandes spécifiques pour chaque cellule.

La figure 7 représente en détails l'accumulateur d'entrée d'une cellule, illustré dans la figure 3, comportant des multiplexeurs dirigeant au besoin des sorties de niveau 1 vers un ou plusieurs opérateur(s) de la cellule.

La figure 8 représente en détails un opérateur générique, illustré dans la figure 2. comportant des sélecteurs choisissant la source de chaque entrée d'opérateur, des synchronisateurs pour le 'pipeline' et la fonction d'opération proprement dite pouvant être une fonction arithmétique ou logique: additionneur-soustracteur, multiplicateur, diviseur, table de fonction linéaire/non-linéaire, comparateur, mémoire ou registre, unité de décalage de bits, etc..

La figure 9 représente en détails l'accumulateur de sortie de la cellule, illustré dans la figure 3, il consiste à choisir l'une ou l'autre sortie d'un opérateur comme sortie spécifique d'une cellule donnée.

### Description détaillée de l'invention

De manière générale, la présente invention propose un processeur modulaire reconfigurable et hiérarchique à traitement et de calculs parallèles En premier lieu les données fournies pour le calcul et le traitement peuvent provenir de mémoires, de processeur externe ou d'interface d'entrée/sorties. La configuration hiérarchique des éléments, notamment les liens entre eux, peut être commandée par un processeur externe qui traite et décide de l'évolution de la configuration suivant les calculs exécutés, ou par l'introduction de machine à états (101) comme illustrée en figure 1a, dans ce dernier cas le processeur peut agir de manière autonome tout autant que de manière évolutive par le fait que les données résultantes des calculs peuvent être évaluées par la machine à états 101, qui agit comme un processeur de commandes des opérations du système.

Le niveau supérieur gère l'ensemble du processeur et comporte les blocs de niveau 1 si le système ne comporte pas de niveau intermédiaire. Le niveau supérieur peut tout autant comporter les blocs de niveau 'n', si 'n' niveaux hiérarchiques sont introduits. Dans une structure simplifiée il pourrait ne comporter que les cellules telles que décrites plus bas et aucun intermédiaire. La structure des blocs d'un niveau donné pourrait être symétrique (les blocs étant identiques) ou non (les blocs étant différents). Dans la présente description qui se veut typique et de complexité intermédiaire, il sera considéré une structure à un niveau constituant un ensemble de blocs identiques de niveau 1 ayant chacun un nombre donné de 'JA' cellules.

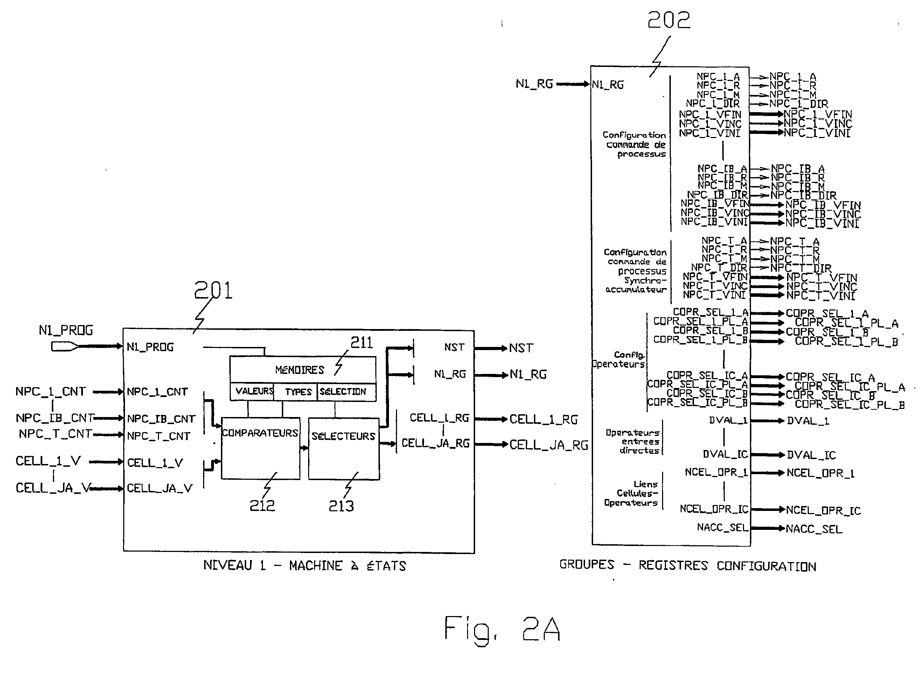

Au niveau supérieur la machine à états (101 de la figure 1a) effectue directement la configuration sur les blocs de niveau 1 soit notamment le paramétrage des machines à états de chaque bloc de niveau 1 (201 de la figure 2a). Les performances sous-jacentes sont gérées par ces dernières, donc de manière indirecte et décentralisée par la machine à états supérieure (101).

La machine à états du niveau supérieur (101) et avec les machines à états des blocs de niveau 1 (201 de la figure 2a) gèrent conjointement le fonctionnement du système.

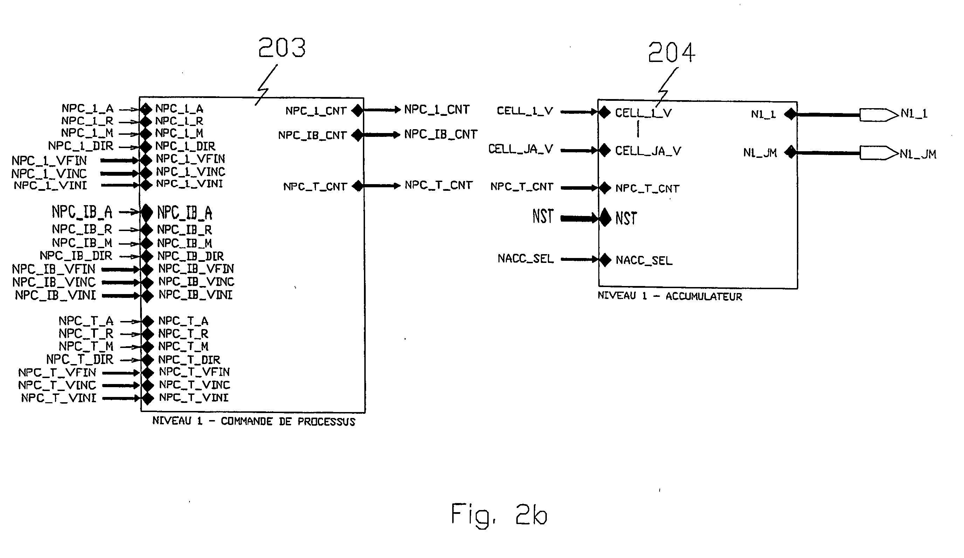

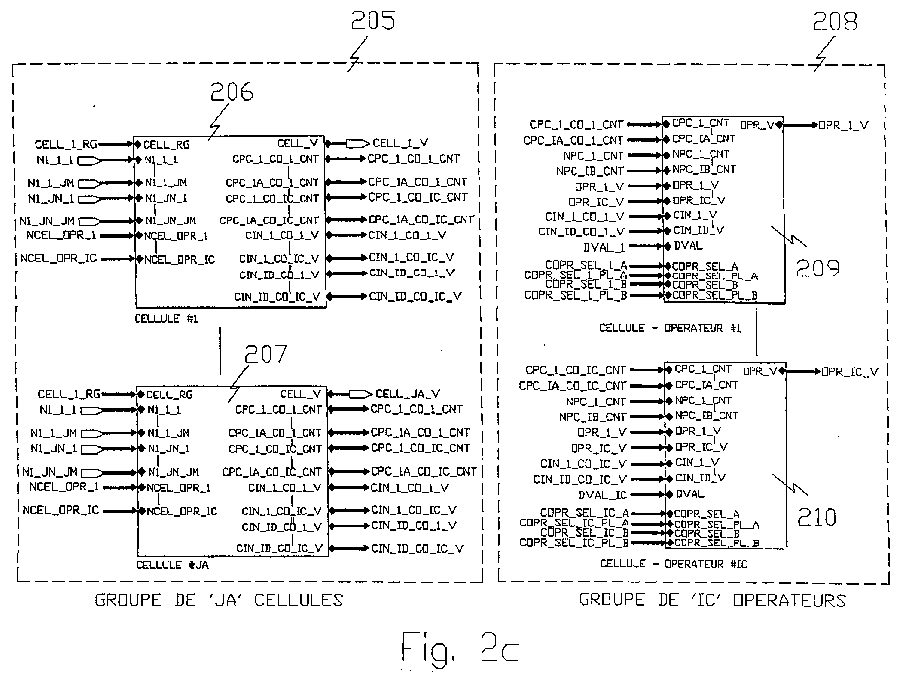

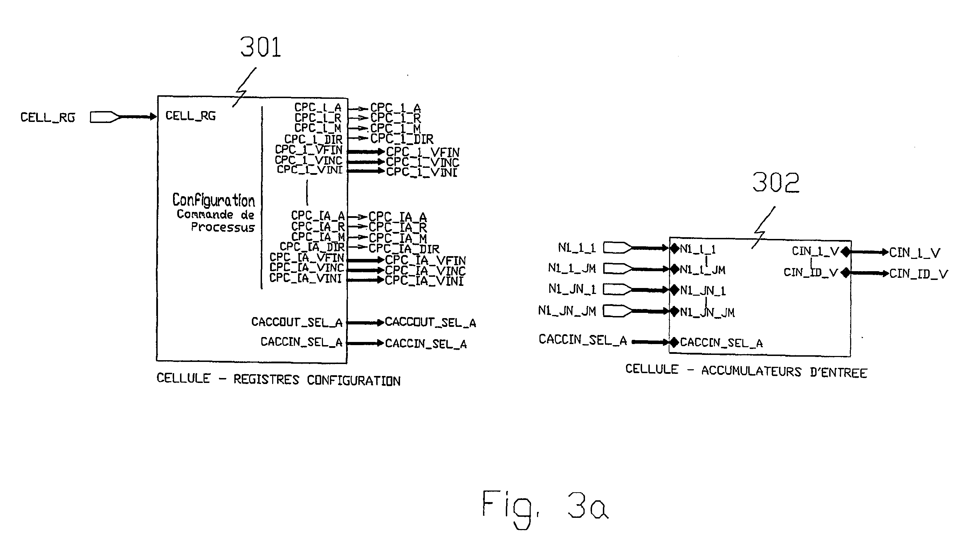

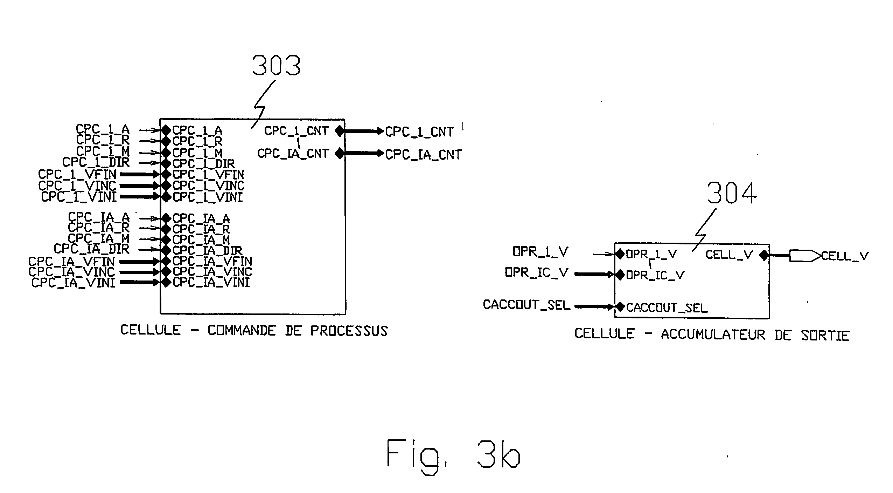

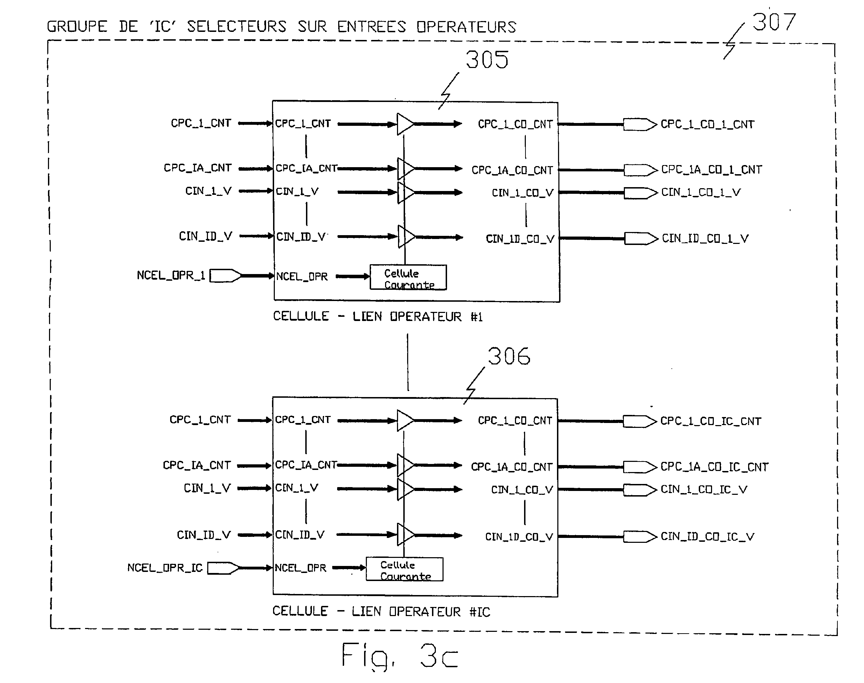

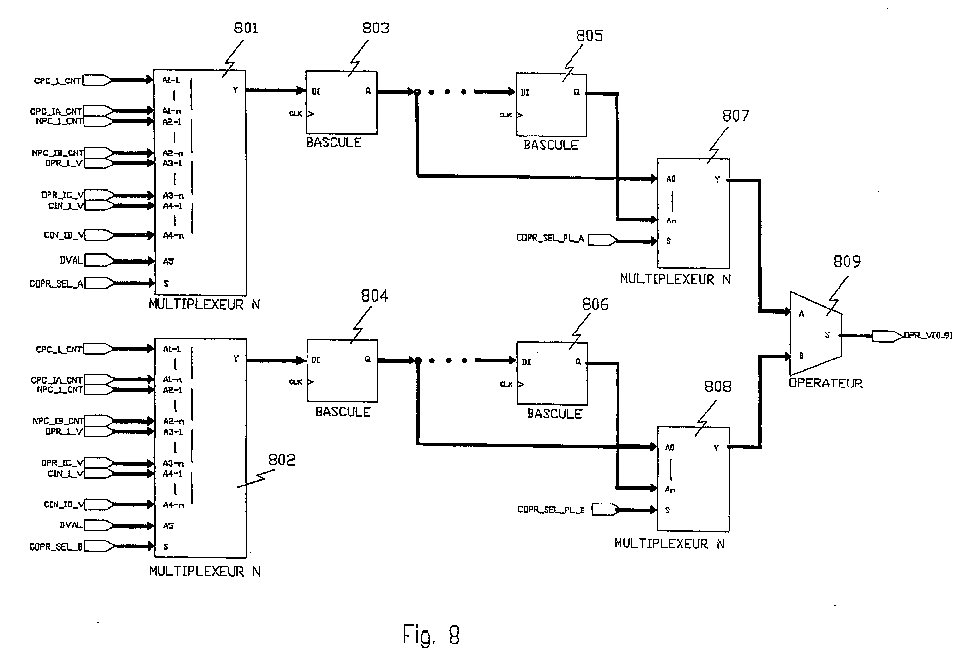

Au niveau de son fonctionnement logique la machine à états du niveau supérieur (101) est comparable à un microcontrôleur ; dans le module (101) le BLOC MÉMOIRE Encodage (102) comporte les différents codes de configuration des niveaux 1, soit les différents registres régissant le fonctionnement des éléments des blocs de niveau 1. Plus précisément les blocs mémoires (102 à 104) sont organisés de manière à ce que les fonctions à accomplir soient regroupées en section de mémoires comme des fonctions de programme à la manière d'un processeur, les fonctions diverses peuvent conditionnellement (sur des résultats) ou inconditionnellement en appeler d'autres comme des appels de fonctions en logiciel. L'encodage des opérations dans les machines à états se fait en mots de type VLIW (very long instruction word) comprenant les blocs de codes à transférer aux machines à états des blocs de niveau 1 (201) ces blocs à transférer constituent les commandes au matériel du système, le transfert de blocs mémoires 101 vers la machine à états 201 se situe normalement au démarrage mais peut être effectué en tout temps. Une fois les blocs de procédures transférés ils sont exécutables par les machines à états des blocs de niveau 1 (201) sur ordre de la machine à états supérieure (101). Ce mode de fonctionnement hiérarchique permet que les décisions du niveau supérieur puissent être acheminées aux blocs de niveau 1 (figures 2) et ultimement aux éléments des cellules (figures 3). Ainsi donc les transferts entre les différentes machines à états constituent l'ensemble du code et les ordres d'exécution transmis de la machine à état supérieure aux autres. L'encodage (VLIW) comporte donc les types d'opérations à effectuer, la configuration en bas niveau impliquée, en particulier sur les opérateurs (figure 8), les connexions entre les différents éléments dont les opérateurs, la configuration des accumulateurs, les types de décisions (comparateurs notamment) ; le tout de manière similaire à un microprocesseur mais de manière décentralisée, hiérarchisée et partagée entre les machines à état de différents niveaux. Chaque élément est configurable de manière directe
ou de manière conditionnelle par l'intermédiaire des COMPARATEURS (107) suivant les résultats reçus sur les BLOCS MÉMOIRES (103) des Résultats-Niveau 1 (sorties des blocs de niveau 1 N1_1_1 à N1_1_JM pour le bloc de niveau 1 #1 jusqu'à N1_JN_1 à N1_JN_JM pour le bloc de niveau 1 #JN) ) ou BLOCS MÉMOIRES (104) des Résultats-Cellules (sorties cellules CELL_1_1_V à CELL_1_JA_V pour le premier bloc de niveau 1 jusqu'à CELL_JN_1_V à CELL_JN_JA_V pour le bloc de niveau 1 # 'JN') ou encore sur des boucles prédéfinies comme en programmation. La Mémoire d'Encodage (102) passe d'une adresse à la suivante selon un ordre séquentiel qui peut être interrompu par les résultats des comparateurs (107) qui peuvent sélectivement ordonner un changement d'adressage de la machine à états (101) sur la mémoire d'encodage (102) suivant des résultats obtenus des blocs mémoires 103 et 104 dont les résultats sont comparés de manière configurable sur une ou plusieurs valeurs. L'acheminement de la configuration des blocs de niveau 1 (105 à 106) est identifié sur les signaux N1_1_PROG à N1_JN_PROG pour les blocs de niveau 1 en nombre de 'JN'. Sur les résultats de comparaisons ou inconditionnellement les ordres (adresses) d'exécution sont donnés immédiatement aux machines à états de niveau 1 (202 figure 2a) concernées.

La machine à états supérieure (101) se comporte de manière similaire à un microprocesseur, et pourrait être en fait être un programme de microprocesseur en autant que celui-ci soit assez rapide pour traiter les informations reçues rapidement. Mais une machine à états adaptée sera toujours plus performance et plus intégrée en ce qu'elle permet le traitement parallèle et simultané des données entrantes, et donner les ordres en parallèle sur les machines à états des blocs de niveau 1 (201 2).

En figure 1b sont regroupés (108) les 'JN' blocs de niveau 1 (109 à 110) dont les détails sont donnés en figures 2. Chaque bloc de niveau 1 comporte les entrées provenant des autres blocs de niveau 1 pouvant être utilisés sélectivement (par configuration à partir de la machine à états 101) pour les calculs, ainsi chaque bloc de niveau 1 comporte un nombre de 'JM' sorties (N1_1_1 à N1_1_JM pour le bloc 109 jusqu'à N1_JN_1 à N1_JN_JM pour le 'JN' ième bloc 110) provenant de ses 'JA' cellules (sélectionnées activement par l'accumulateur 204 en figure 2b). Chaque bloc de niveau 1 (109 à 110) achemine également les sorties de cellules qui en font respectivement partie (CELL_1_1_V à CELL _1_JA_V pour le bloc 109 jusqu'à CELL _JN_1_V à CELL _JN_JA_V pour le 'JN' ième bloc 110) soit par exemple pour des blocs comportant chacun 'JA' cellules, toutefois les blocs pourraient tout autant comporter un nombre différent de cellules.

Les figures 2a à 2c illustrent en détails un bloc de niveau 1. Une machine à états (201) est incorporée dans chaque bloc de niveau 1. Cette machine comporte des blocs d'opérations en mémoires (211). Les différentes opérations sont préalablement transférées par la première machine à état (101 en figure 1a) à l'initialisation ou au besoin ; par la suite la première machine à états (101) donne les ordres d'exécution des différentes opérations de manière inconditionnelle de type appel d'instruction ou conditionnellement sur différents résultats notamment sur les cellules et les blocs de niveau 1. Les opérations effectuées telles qu'encodées en instruction de type (VLIW - very long instruction word). L'encodage (VLIW) comporte donc les types d'opérations à effectuer, la configuration en bas niveau (opérateurs - figure 8) impliqués, les connexions entre les différents éléments, la configuration des accumulateurs, les types de décisions (comparateurs notamment). Les codes sont destinées à la configuration des cellules ou des éléments du bloc de niveau 1 dont les commandes de processus (203). Comme décrit précédemment les codes sont soit fixes ou dépendants des ordres donnés par la machine à états supérieure (101 figure 1a) ou d'autres résultats entrants dans la machine à états de niveau 1 (201) passant dans les comparateurs (212) notamment les valeurs de sorties de cellules (CELL_1_V à CELL_JA_V), des compteurs programmables provenant de Commande de processus 203 (par NPC_1_CNT à NPC_IB_CNT et NPC_T_CNT) qui sont aussi programmées directement sous le signal N1_RG déterminant les paramètres de commande de processus par le bloc de registres de configurations (202). Chaque ordre reçu de la machine à états supérieure (101) ou des comparateurs (212) commande une adresse ou une séquence d'adresses sur les mémoires (211) contenant un ensemble de Valeurs transmises par les Sélecteurs (213) incluant les adresses-données de registres sur des blocs de niveau 1 notamment N1_RG et NST ainsi que sur les cellules du bloc notamment CELL_1_RG à CELL_JA_RD. Ainsi la machine à état de niveau 1 (201) configure et commande l'ensemble des opérations du bloc de niveau 1 et les cellules qui en font partie, et ce de manière dynamique en fonction de commandes préprogrammées ou sur des résultats obtenus.

Le bloc de registres de configurations de groupe (202) de la figure 2a nommément les REGISTRES DE CONFIGURATION, fournit les paramètres de fonctionnement du bloc 203 (COMMANDES DE PROCESSUS), soit le nombre de 'IB' compteurs programmables des sorties NPC_1_CNT à NPC_IB_CNT et NPC_T_CNT. La programmation de ces compteurs se fait en établissant la valeur initiale (NPC_1_VINI à NPC_IB_VINI et NPC_T_VINI), la valeur finale (NPC_1_VFIN à NPC_IB_VFIN et NPC_T_VFIN), et l'incrément (NPC_1_VINC à NPC_IB_VINC et

NPC_T_VINC). La synchronisation se fait par 4 signaux distincts soit la remise à zéro (NPC_1_R à NPC_IB_R et NPC_T_R), le chargement des valeurs (NPC_1_M à NPC_IB_M et NPC_T_M), la direction de comptage (NPC_1_DIR à NPC_IB_DIR et NPC_T_DIR) et l'activation du comptage (NPC_1_A à NPC_IB_A et

NPC_T_A). De plus 202 - REGISTRES CONFIGURATION déterminent les valeurs sources des entrées A et B des opérateurs 208 (209, 210 au nombre de 'IC') par les signaux COPR_SEL_1_A et COPR_SEL_1_B à COPR_SEL_IC_A et COPR_SEL_IC_B ; il en est de même pour les commandes de 'Pipeline' des opérateurs sur les mêmes entrées par les signaux COPR_SEL_1_PL_A et COPR_SEL_1_PL_B à COPR_SEL_IC_PL_A et COPR_SEL_IC_PL_B. Les registres de configuration de groupe (202) fournissent des valeurs directes DVAL_1 à DVAL_IC disponibles au besoin par l'une ou l'autre entrée d'opérateurs. Les registres de configuration du groupe (202) déterminent sur une période de temps donnée quelle cellule commandera les entrées de chaque opérateur (NCEL_OPR_1 à NCEL_OPR_IC, les sorties des opérateurs étant indépendantes des entrées et peuvent de fait être associés à différentes cellules en entrée et en sortie et ce de manière dynamique. Enfin la commande des accumulateurs du groupe est déterminée sur les registres (202) par le signal NACC_SEL qui sélectionne la redirection et la combinaison des valeurs de sorties des cellules de manière additive ou autre selon des besoins.

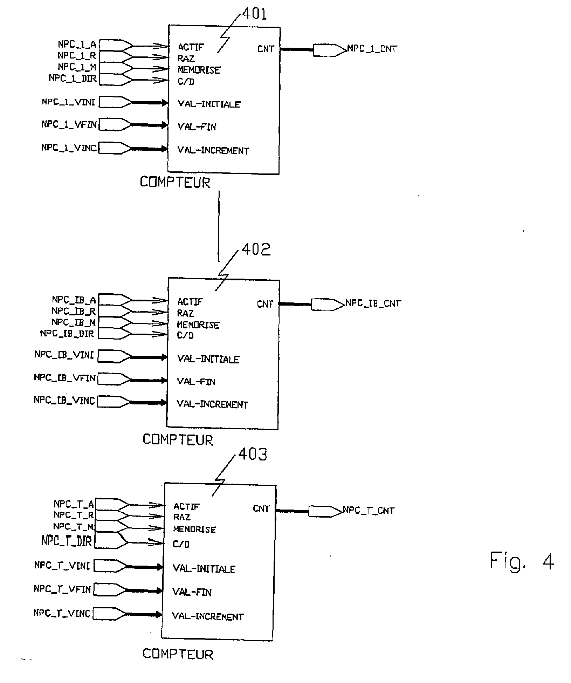

Le bloc de commande de processus 203 de la figure 2b constitue la commande des processus par des compteurs programmables sur valeurs initiales, pas, modulo, direction qui peuvent au besoin et sélectivement commander les adressages, des facteurs de calculs ou l'indexation des calculs des cellules, de mémorisation ou de la direction des résultats. Le bloc de commande de processus 203 est illustré en détails en figure 4, il fournit 'IB' valeurs distinctes de comptage sur les signaux NPC_1_CNT à NPC_IB_CNT et NPC_T_CNT.

Les cellules proprement dites au nombre de 'JA' 205 sont sommairement groupées en figure 2c (206 à 207). Les données externes entrantes sur les cellules sont au choix les données de Registres de la Machine à états (201 sur les signaux CELL_1_RG à CELL_JA_RG) ; des sorties des Accumulateurs de Blocs de Niveau 1 des 'JN' blocs de niveau 1 108 (de l'accumulateur 204 de chaque bloc de niveaux 1 soit 109 à 110 sur N1_1_1 à N1_1_JM pour le bloc #1 de niveau 1 jusqu'à N1_JN_1 à N1_JN_JM pour le bloc #JN de niveau 1) ; les sélections des entrées d'opérateurs par les cellules NCEL_OPR_1 à NCEL_OPR_IC. Les sorties des cellules sont identifiées par les signaux CELL_1_V à CELL_JA_V. Le bloc Cellule est illustré en détail en figures 3.

Les Éléments 209 à 210 de la figure 2c constituent les opérateurs 208,. Ces opérateurs 208 constituent le coeur de la structure du système. Ils sont décrits en détails en figure 8. Les entrées des opérateurs sont de provenances diverses : soit des Commandes de Processus de la Cellule source sélectionnée pour chaque opérateur en un moment donné par les signaux NCEL_OPR_1 à NCEL_OPR_IC sélectionnant les signaux de commandes de processus de cellule sélectionnée pour chaque opérateur en un temps donné en l'occurence (CPC_1_CO_1_CNT à CPC_IA_CO_1_CNT) jusqu'à (CPC_1_CO_IC_CNT à CPC_IA_CO_IC_CNT) pour 'A' signaux de commandes sur IC opérateurs activés sur une cellule à la fois dans un temps donné pour chaque opérateur, des Commandes de Processus de Blocs Niveau 1 (NPC_1_CNT à NPC_IB_CNT), des autres sorties d'opérateurs (OPR_1_V à OPR_IC_V), des accumulateurs d'entrées de cellules également pour chaque opérateur en un moment donné par les signaux NCEL_OPR_1 à NCEL_OPR_IC sélectionnant les signaux d'entrées d'accumulateur de cellule sélectionnée pour chaque opérateur en un temps donné soit (CIN_1_CO_1_V à CIN_ID_CO_1_V) jusqu'à (CIN_1_CO_IC_V à CIN_ID_CO_IC_V) ou de valeurs directes de registres (DVAL_1 à DVAL_IC) fournies par les registres de configuration du niveau 1 (202). La sélection des entrées 'A' des opérateurs est déterminée par les signaux COPR_SEL_1_A à COPR_SEL_IC_A, et les pipelines des entrées 'A' des opérateurs est déterminée par les signaux COPR_SEL_1_PL_A à COPR_SEL_IC_PL_A, la sélection des entrées·'B' des opérateurs est déterminée par les signaux COPR_SEL_1_B à COPR_SEL_IC_B et les pipelines des entrées 'B' des opérateurs est déterminée par les signaux COPR_SEL_1_PL_B à COPR_SEL_IC_PL_B ; l'ensemble de ces signaux de commandes provient du bloc 202 - Groupes Registres de Configuration.

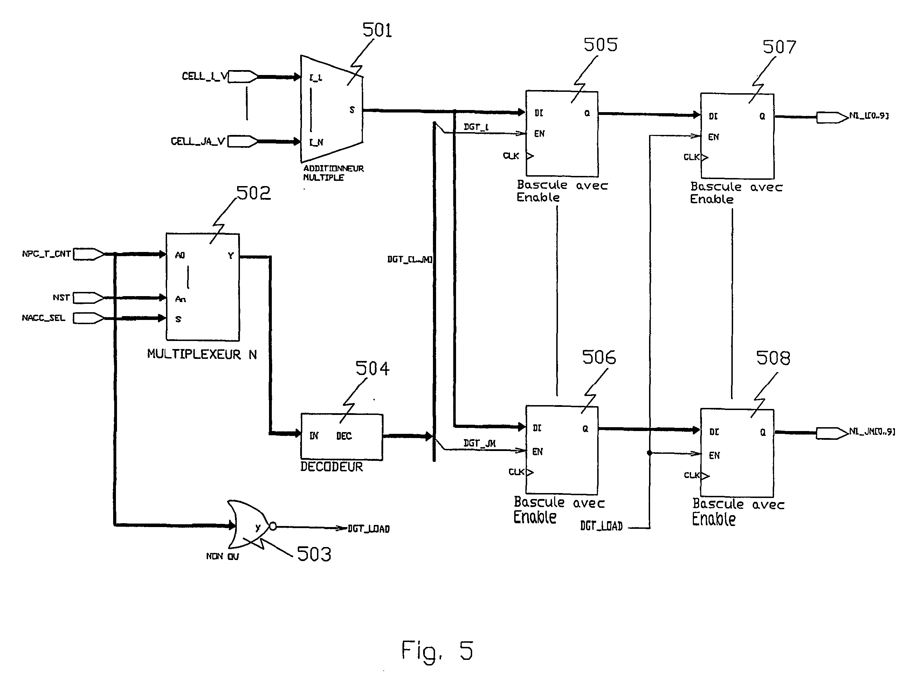

L'accumulateur de Bloc de niveau 1 (204) capte les sorties de chaque cellule (CELL_1_V à CELL_JA_V). Les commandes de redirection des sorties d'accumulateur sont déterminées par différents signaux sélectionnés par l'état du signal NACC_SEL provenant du bloc 202 - registre de configuration. Les commandes de sortie d'Accumulateur proviennent au choix (par NACC_SEL) du compteur de synchronisation NPC_T_CNT, de registre d'état programmable NST provenant de la machine à état du niveau 1 (201), ou d'autres provenance. L'accumulateur de Niveau 1 est illustré en détails en figure 5. Les sorties résultantes de l'accumulateur sont au nombre de 'JM' et proviennent de combinaison programmées des sorties des cellules du Bloc de Niveau 1.

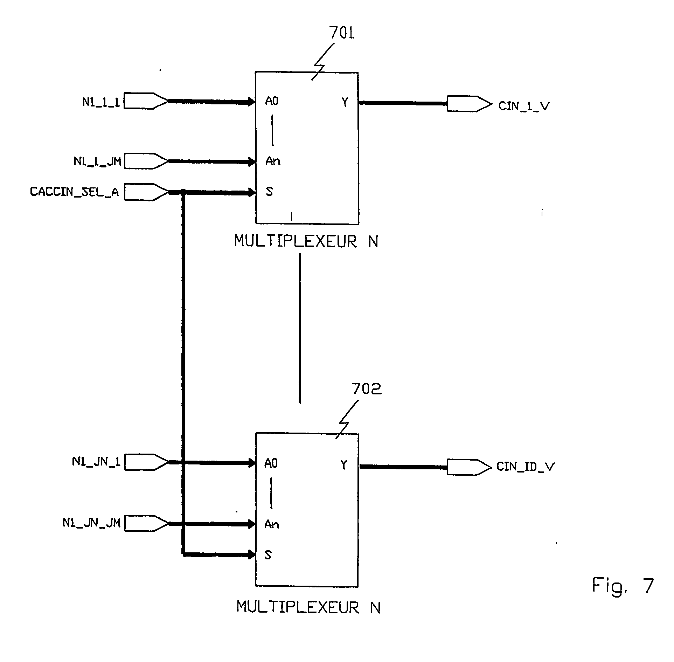

Les figures 3 (3a, 3b, 3c) illustrent en détail une cellule typique. Soit sur l'entrée de la cellule 302 - Accumulateur d'entrée, acheminant les entrées de la cellule sur les opérateurs. L'accumulateur d'Entrée de cellule 302 capture les sorties des 'JN' Blocs de Niveau 1 sur 'JM' sorties chacune (N1_1_1 à N1_1_JM pour le bloc #1 de niveau 1 jusqu'à N1_JN_1 à N1_JN_JM pour le bloc #JN de niveau 1). Le signal CACCIN_SEL_A provient des Registres de Configuration de la Cellule (301) et choisit 'ID' signaux disponibles à partir des signaux entrants et les rend disponibles aux opérateurs (CIN_1_V à CIN_ID_V). Les accumulateurs d'entrées sont décrits en détails en figure 7. Tout comme les blocs de Niveau 1 (figures 2) les cellules contiennent des Commandes de Processus (303) propres à chaque cellule. Les registres de configuration de chaque cellule (301) fournissent notamment les paramètres du bloc 303 - COMMANDE DE PROCESSUS, soit le nombre 'IA' compteurs programmables des sorties (CPC_1_CNT à CPC_IA_CNT. La programmation de ces compteurs se fait par les registres de configuration (301) en établissant la valeur initiale (CPC_1_VINI à CPC_IA_VINI), la valeur finale (CPC_1_VFIN à CPC_IA_VFIN), et l'incrément (CPC_1_VINC à CPC_IA_VINC). La synchronisation se fait par 4 signaux distincts soit la remise à zéro (CPC_1_R à CPC_IA_R), le chargement des valeurs (CPC_1_M à CPC_IA_M), la direction de comptage (CPC_1_DIR à CPC_IA_DIR) et l'activation du comptage (CPC_1_A à CPC_IA_A).

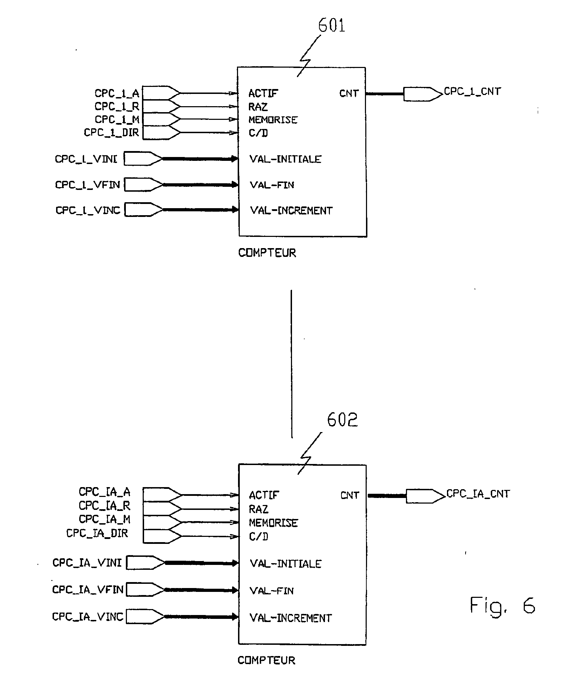

Les sélecteurs des entrées d'opérateurs 305 à 306 de la figure 3c acheminent les entrées d'opérateurs au nombre de 'IC' (307) qui proviennent des cellules, soit pour la cellule choisie en un temps donnée pour chaque opérateur :en l'occurrence les signaux provenant de la commande de processus 303 (décrit en détail en figure 6) de la cellule CPC_1_CNT à CPC_1A_CNT ainsi que les signaux CIN_1_V à CIN_1D_V provenant des accumulateurs d'entrée de la cellule 302. Il est à noter que les autres entrées d'opérateurs proviennent d'autres ressources dont les groupes et ne passent donc pas par les sélecteurs 305 à 306. Cette opération de sélection s'effectue pour chacun des 'IC' opérateurs, le passage vers les opérateurs est choisi par les signaux NCEL_OPR_1 à NCEL_OPR_IC fournis par les registres de configuration du groupe soit 202 en figure 2a, soit pour chaque opérateur la valeur déterminant en un temps donné de quelle cellule les entrées de niveau cellule proviennent. D'abord les sorties des sélecteurs d'entrées d'opérateurs 305 à 306 soit CPC_1_CO_1_CNT à CPC_1A_CO_1_CNT jusqu'à CPC_1_CO_IC_CNT à CPC_1A_CO_IC_CNT pour IC opérateurs. Ensuite les sorties des sélecteurs d'entrées d'opérateurs 305 à 306 soit CIN_1_CO_1_V à CIN_1A_CO_1_V jusqu'à CIN_1_CO_IC_V à CIN_1A_CO_IC_V d'une cellule donnée correspondent aux signaux entrants CIN_1_V à CIN_1A_V de la cellule acheminée à un ou plusieurs opérateurs toujours selon les commandes NCEI_OPR_1 à NCEL_OPR_IC. L'ensemble de ces sorties des sélecteurs d'entrées d'opérateurs 305 à 306 ne sont actifs en un temps donné que pour un sélecteur de lien opérateur donné soit sur la cellule choisie (respectivement par NCEL_OPR_1 à NCEL_OPR_IC) en un temps donné pour contrôler cet opérateur par les données qu'elle y achemine.

La Sortie de chaque Cellule des figures 3 est déterminée par le bloc 304 - Accumulateurs de Sortie. Le bloc accumulateur 304 sélectionne la sortie de l'opérateur (OPR_1_V à OPR_IC_V) qui constitue la sortie effective de la cellule, la sélection se faisant par le signal CACCOUT_SEL qui provient du bloc 301 - registres de configurations. En l'occurrence un opérateur ayant une sortie assignée à une sortie de cellule donnée peut tout autant avoir ses entrées provenir d'une autre cellule.

La figure 4 illustre en détails le Module Commande de Processus du bloc de Niveau 1 (203) de la figure 2b. Chaque Bloc de Niveau 1 comporte un tel module qui fournit des signaux de synchronisation globaux pour les Cellules qu'il contient, en l'occurrence des compteurs programmables (401 à 402) au nombre de 'IB' permettant de gérer des boucles d'opération, d'adressage ou de données de factorisation progressives. Les signaux de Synchronisation sont NPC_1_CNT à NPC_IB_CNT et peuvent sélectivement et en toute combinaison être dirigés vers les entrées de différents opérateurs. De plus un compteur programmable supplémentaire (403) est destiné au cadencement des accumulateurs du Bloc courant de Niveau 1 (204) en figure 2b, permettant notamment de sélectionner progressivement des sorties de cellules vers différentes sorties du bloc de niveau 1, cela permet par exemple des calculs croisés, ou des calculs de matrices.

Les différents compteurs 401 à 403 de la figure 4 sont programmés par les registres de configuration (202 - figure 2a). Préalablement sur ces compteurs sont établies différentes valeurs soit
- La valeur initiale (NPC_1_VINI à NPC_IB_VINI et NPC_T_VINI), Cette donnée constitue la valeur de démarrage du compteur ou de retour après un cycle complet de comptage
- La valeur finale (NPC_1_VFIN à NPC_IB_VFIN et NPC_T_VFIN), Cette donnée constitue la valeur de fin de cycle de comptage à partir de laquelle un nouveau cycle recommence sur la valeur initiale.
- l'incrément (NPC_1_VINC à NPC_IB_VINC et

NPC_T_VINC). Cette donnée constitue la valeur de progression du compteur soit en incrémentation ou en décrémentation selon la direction déterminée.

La commande et la synchronisation se font par 4 signaux distincts soit :
- la remise à zéro (NPC_1_R à NPC_IB_R et NPC_T_R), Le compteur sur ce signal est mis à zéro et arrête de compter.
- le chargement des valeurs (NPC_1_M à NPC_IB_M et NPC_T_M), Le compteur sur ce signal charge les 3 valeurs (initiale, finale, incrémentation).
- la direction de comptage (NPC_1_DIR à NPC_IB_DIR et NPC_T_DIR). Le compteur progresse en montant ou en descendant de la valeur d'incrément donnée.
- l'activation du comptage (NPC_1_A à NPC_IB_A et NPC_T_A). Commande de démarrage du compteur.

Ces commandes de compteurs peuvent être adressées spécifiquement sur chacun ou sur plusieurs compteurs simultanément, le registre de configuration 202 décodant une série d'adresses correspondant à des compteurs spécifiques, ou à un ensemble de compteurs. Ainsi au besoin toute la structure ou une partie de la structure d'un bloc de niveau 1 (ou plusieurs blocs de niveau 1 par adressages supplémentaires) peut être synchronisée de manière précise.

La figure 5 décrit l'Accumulateur de sortie du bloc de niveau 1 (204) de la figure 2b. Globalement ce circuit traite les données sortantes des cellules de chaque bloc de niveau 1. De fait chaque sortie de cellule y est représentée CELL_1_V à CELL_JA_V pour 'JA' cellules dans un bloc de niveau 1 donné. Les valeurs de cellules y sont additionnées dans le bloc additionneur (501). Celles-ci sont représentées pour être globalement additionnées mais il est possible d'introduire un sélecteur commandé par une machine à états qui choisit les cellules à additionner, dans ce cas un sélecteur est introduit entre l'additionneur (501) et les sorties de cellules. Les résultats d'addition sont dirigés vers des bascules (flip-flop 505, 506) pour y être enregistrés, le choix de la bascule qui enregistrera la valeur d'addition se fait sur chaque cycle d'horloge et peut être notamment déterminé par le compteur global NPC_T_CNT (bloc 403 de la figure 4) ou par un état NST provenant de la machine à états du bloc de niveau 1 (201 en figure 2a), le choix du signal source déterminant l'enregistrement d'une ou l'autre bascule (505, 506) se fait par le signal NACC_SEL provenant du Registre de Configuration (202 - figure 2a). Un couple multiplexeur (502) / décodeur (504) est représenté pour choisir une et une seule bascule pour mémoriser une addition sur un cycle, mais le multiplexeur 502 et décodeur 504 pourraient être remplacés par un champ de bits qui sélectionnerait pour chaque bit lesquelles bascules (une ou plusieurs) mémoriseraient en un temps donné les valeurs produites par l'additionneur 501. Enfin un second groupe de bascules (507, 508) charge les valeurs du premier rang de bascules, dans l'exemple cela s'effectue au terme d'un comptage de NPC_T_CNT sur la porte Non-OU 503, mais pourrait tout autant être une condition programmable et variable comme une combinaison de valeurs de NPC_T_CNT, une machine à états qui remplacerait la porte Non-OU 503, une valeur fixe notamment. Ainsi un nombre de 'JM' valeurs est disponible cycliquement aux sorties des bascules 507, 508 pour traitement ultérieur.

La figure 6 représente en détails la Commande de Processus d'une cellule (303 en figure 3b). Chaque cellule contient un groupe de 'IA' compteurs dont les valeurs sont disponibles pour la synchronisation, les adressages de mémoires, la factorisation sur les différents opérateurs: en l'occurrence des compteurs programmables (601 à 602) au nombre de 'IA' permettant de gérer des boucles d'opérations, d'adressages ou de données de factorisation progressives. Les signaux de Synchronisation sont CPC_1_CNT à CPC_IA_CNT et peuvent sélectivement et en toute combinaison être dirigés vers les entrées de différents opérateurs. Les différents compteurs 601 à 602 de la figure 6 sont programmés par les registres de configuration (301 - figure 3a). Préalablement sur ces compteurs sont établies différentes valeurs soit
- la valeur initiale (CPC_1_VINI à CPC_IA_VINI), Cette donnée constitue la valeur de démarrage du compteur ou de retour après un cycle complet de comptage
- la valeur finale (CPC_1_VFIN à CPC_IA_VFIN), Cette donnée constitue la valeur de fin de cycle de comptage à partir de laquelle un nouveau cycle recommence sur la valeur initiale.
- l'incrément (CPC_1_VINC à CPC_IA_VINC). Cette donnée constitue la valeur de progression du compteur soit en incrémentation ou en décrémentation selon la direction déterminée.

La commande et la synchronisation se font par 4 signaux distincts soit :
- la remise à zéro (CPC_1_R à CPC_IA_R), Le compteur sur ce signal est mis à zéro et arrête de compter.
- le chargement des valeurs (CPC_1_M à CPC_IA_M), Le compteur sur ce signal charge les 3 valeurs (initiale, finale, incrémentation).
- la direction de comptage (CPC_1_DIR à CPC_IA_DIR). Le compteur progresse en montant ou en descendant de la valeur d'incrément donnée.
- l'activation du comptage (CPC_1_A à CPC_IA_A). Commande de démarrage du compteur.

Ces commandes de compteurs peuvent être adressées spécifiquement sur chacun ou sur plusieurs compteurs simultanément, le registre de configuration 301 décodant une série d'adresses correspondant à des compteurs spécifiques, ou à un ensemble de compteurs. Ainsi au besoin toute la structure ou une partie de la structure d'une cellule (ou plusieurs cellules par adressages supplémentaires) peut être synchronisée de manière précise.

La figure 7 représente en détails les Accumulateurs d'entrée d'une cellule (302 en figure 3a). Les signaux d'entrées de la cellule sont notamment des sorties d'Accumulateurs de blocs de niveau 1 soit N1_1_1 à N1_1_JM pour 'JM' sorties du bloc #1 de niveau 1 jusqu'à N1_JN_1 à N1_JN_JM pour 'JM' sorties du bloc #JN de niveau 1. Un autre choix possible qui peut s'ajouter et n'est pas représenté en figure 7 peut aussi être constitué des sorties des autres Cellules d'un bloc de niveau 1 donné, par exemple les sorties des 'JA' cellules du même bloc de niveau 1 que la cellule courante soit les sorties CELL_1_V à CELL_JA_V des cellules 1 à 'JA' d'un bloc de niveau 1 donné. La sélection des entrées est effectuée par des multiplexeurs 701, 702 sur la figure 7 sur la commande CACCIN_SEL_A provenant des registres de configuration (301 - figure 3a), ainsi les multiplexeurs sont au nombre de 'ID' les données fournies sélectivement à la cellule sont CIN_1_V à CIN_ID_V et pourront être choisies sur les différents opérateurs.

La figure 8 représente en détails l'opérateur (209 à 210 en figure 2c) assigné dynamiquement à une cellule sélectionnée en un temps donné sur ses entrées. L'opérateur est la ressource où convergent et sont traitées les données du système, il constitue donc le noyau opérationnel du système. L'opérateur comporte des entrées et une sortie. Un opérateur comporte typiquement 2 entrées comme pour un opérateur arithmétique additionneur, multiplicateur sur des entrées A et B; tout comme pour un opérateur logique sur des entrées A et B ; tout comme un opérateur non-linéaire, un comparateur ; tout comme un opérateur de mémorisation sur des entrées Adresse/Données. L'architecture du système peut tout autant supporter un plus grand nombre d'entrées au besoin, notamment des données comme A et B, ou des commandes (soustraction/addition, mémorisation - 'write memory').

Les modules de multiplexage 801 et 802 en figure 8 font la sélection des données entrantes de l'opérateur, deux dans l'exemple. Sur ces modules multiplexeurs 801 et 802 sont introduits les valeurs disponibles pour l'opérateur, soit notamment :
- les compteurs CPC_1_CNT à CPC_IA_CNT provenant du bloc Commande de Processus de la cellule (303 en figure 3b) d'une cellule sélectionnée dynamiquement
- les compteurs NPC_1_CNT à NPC_IB_CNT provenant du bloc Commande de Processus du bloc de niveau 1 (203 en figure 2b)
- des sorties des autres opérateurs OPR_1_V à OPR_IC_V provenant des blocs opérateurs (209 à 210 en figure 2c )
- de l'accumulateur d'entrées 302 en figure 3a en détails en figure 7 sur les signaux CIN_1_V à

CIN_ ID_V . Cet accumulateur traite de données externes à la cellule sélectionnée soit notamment des sorties d'accumulateurs de blocs de niveau 1 (N1_1_1 à N1_1_JM du bloc #1 de niveau 1 à N1_JN_1 à N1_JN_JM du bloc #JN de niveau 1) comme indiqué en figure 7, ou autrement des sorties d'autres cellules CELL_1_V à CELL_JA_V du même bloc de niveau 1, ce dernier cas n'est pas représenté mais est tout autant possible.
- de données directes DVAL en provenance de registres de configuration (202 figure 2a ) disponibles pour chaque opérateur de cellule sélectionnée comme entrée.
- d'autres entrées non représentées : Valeurs cycliques en mémoire, entrées d'interface externe (Ports), etc..

La sélection sur les modules de multiplexage 801 et 802 en figure 8 est effectuée par les signaux COPR_SEL_A et COPR_SEL_B respectivement pour les entrées A et B, ces signaux de sélection proviennent du module de configuration du groupe (202 en figure 2a) sur les signaux COPR_SEL_1_A à COPR_SEL_IC_A et

COPR_SEL_1_B à COPR_SEL_IC_B. Une fois les entrées d'un opérateur donné choisies elles doivent être synchronisées de manière appropriée. Les 'IC' Opérateurs sont inter reliés, ce qui implique que les calculs se font sur des cycles d'horloge distincts, il peut donc arriver que sur un opérateur donné une entrée ait passé par exemple par 2 opérateurs (délai de 2 cycles d'horloge) et que l'autre entrée ait passé par exemple par 4 opérateurs (délai de 4 cycles d'horloge), dans ce cas la première entrée est en avance de 2 cycles d'horloge, or au traitement dans le bloc d'opération (809 en figure 8) qui reçoit ces 2 entrées, celles-ci doivent être cohérentes (sur le même cycle d'horloge), dans ce cas d'exemple le premier signal doit être retardé de 2 cycles d'horloge. Les séries de bascules (flip-flops sur 803, 805, 804, 806) ajustent ces cycles d'horloges. Ainsi le retard de cycles d'horloge ou l'ajustement de latence des entrées de l'opérateur se fait sélectivement sur le choix de la sortie de bascule par les multiplexeurs 807 et 808 de la figure 8. Dans l'exemple le premier signal passe par 3 bascules successives et la seconde entrée passe par une seule bascule. La commande de sélection des retards sur les multiplexeurs (807 qui choisit sur la série de bascules 803-805 ; 808 qui choisit sur la série de bascules 804-806) est respectivement COPR_SEL_PL_A et COPR_SEL_PL_B, ces commandes proviennent du bloc de registres de configuration de la cellule (301 en figure 3a) sur les signaux COPR_SEL_1_PL_A à COPR_SEL_IC_PL_A et COPR_SEL_1_PL_B à COPR_SEL_IC_PL_B.

Sur la figure 8 la fonction de l'opérateur est finalement effectuée par le module 809. Cet opérateur est au choix de l'implantation du système une fonction arithmétique (virgule fixe ou flottante), logique ou de mémorisation ; notamment et de manière non-exhaustive:
- arithmétique : Additionneur/Soustracteur, Multiplicateur, Diviseur, Fonction linéaire / non linéaire, Incrémentation/Décrémentation ou autres.
- logique : Comparateur (égal, plus grand, plus petit, etc.), Décaleur Gauche-droite ('Barrel Shifter') ou autres.
- mémoire : Écriture / Lecture, Table de fonction ou autres.

Ainsi sur une groupe donné de cellules comportant un groupe de 'IC' opérateurs il pourrait par exemple avoir 2 opérateurs d'addition/soustraction, 1 multiplicateur, 3 mémoires adressables, 1 décaleur ('Shifter') de bits logique, 1 table de fonction non linéaire, 2 comparateurs et ainsi de suite. Et comme indiqué précédemment les opérateurs peuvent également comporter plus de 2 entrées comme il est représenté dans les schémas. La sortie de l'opérateur est le signal OPR_V, sur une cellule nous avons OPR_1_V à OPR_IC_V pour un nombre de 'IC' opérateurs. Ces sorties comme vu précédemment sont traitées au niveau des blocs de niveau 1, ou peuvent être redirigés sur d'autres cellules. Le cas échéant des opérateurs pourraient être destinés de manière fixe à des cellules.

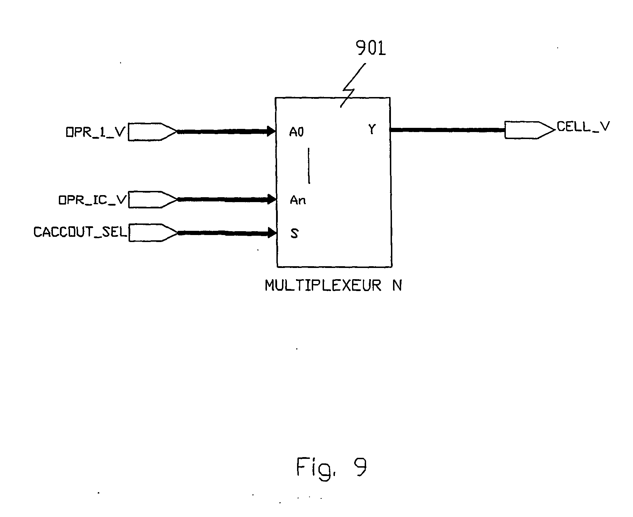

Sur la figure 9 est représenté l'Accumulateur de sortie de la cellule (304 en figure 3b). Essentiellement sur ce module la sortie d'un opérateur d'une cellule donnée est choisi l'opérateur dont le résultat constitue aussi la sortie de la cellule. Donc sur le multiplexeur 901, les 'IC' sorties des 'IC' opérateurs OPR_1_V à OPR_IC_V ; la commande de sélection CACCOUT_SEL provient du module Registres de Configuration de la cellule (301 en figure 3a).

## Revendications

1. Méthode de gestion des ressources d'un système de processeur modulaire ledit processeur gérant différentes données afin d'obtenir des résultats, lesdites données étant traitées par des éléments situés sur différents niveaux hiérarchiques et organisés selon une architecture flexible, lesdits éléments comprenant :
- des opérateurs situés sur le niveau de base, lesdits opérateurs comprenant des fonctions de nature logique ou arithmétique ou d'opérateur non-linéaire ou comparateur ou de mémorisation;
- des cellules situées sur le niveau intermédiaire lesdites cellules transmettant les données en provenance des opérateurs ou vers les opérateurs ;
- des blocs situés sur le niveau supérieur et constitués de regroupements de cellules, lesdits blocs comprenant une machine à état de niveau inférieur transmettant les résultats en provenance des cellules ;
**caractérisé en ce que** ladite méthode comprend les étapes de :
- transmission d'une instruction d'un programme contenu dans une première machine à état de niveau supérieur vers la machine à état de niveau inférieur pour gérer le déroulement du programme :
- attribution des liens entre les différentes cellules qui contiennent les données entrantes et les opérateurs du bloc de la machine à état de niveau inférieur pour réaliser la mise en place desdites données entrantes ;
- attribution des liens entre les opérateurs d'un bloc de la machine à état de niveau inférieur pour réaliser le traitement desdites données entrantes ;
- attribution des liens entre les différents opérateurs par la machine à état de niveau inférieur, lors du déroulement des instructions du programme, en fonction des données sortantes obtenues à partir du traitement des données entrantes,
- donner des ordres à la machine à état de niveau inférieur par la machine à état de niveau supérieur, par les valeurs de sorties des cellules et par les sorties d'une commande de processus, cette commande de processus étant constituée par des compteurs programmables qui peuvent, au besoin, et sélectivement, diriger les résultats.

2. Méthode de gestion selon la revendication 1 comprenant également une étape d'acheminement des données en entrées et sorties de manière dynamique et indépendante sur chaque entrée, sortie et opérateur et ce à partir de valeurs déterminées en mémoires prédéfinies correspondant aux liens entre les sources et les destinations.

3. Méthode de gestion selon la revendication 1 ou 2, comprenant également une étape de transmission des données entrantes dirigées de manière dynamique vers les groupes d'opérateurs à partir d'un processeur externe ou d'interfaces d'entrées provenant de dispositifs externes, l'acheminement des données vers les groupes d'opérateurs pouvant être reconfiguré dynamiquement selon les besoins.

4. Méthode de gestion selon l'une des revendications précédentes, comprenant également une étape de transmission des données sortantes vers des mémoires ou des dispositifs externes ou des interfaces de sorties.

5. Méthode de gestion selon l'une des revendications précédentes, comprenant également une étape de configuration des entrées des différents opérateurs logiques et arithmétiques regroupés en blocs, partagés sur des cellules et accessibles sur des cellules choisies dynamiquement.

6. Méthode de gestion selon l'une des revendications précédentes, comprenant également une étape de configuration des entrées des différents opérateurs logiques et arithmétiques en partie assignés à des cellules selon les besoins de configuration.

7. Méthode de gestion selon l'une des revendications précédentes, comprenant également une étape de sélection de provenance de chaque entrée pour chaque entrée de chaque opérateur.

8. Méthode de gestion selon l'une des revendications précédentes, comprenant également une étape de saisie des données de sorties de cellules sous forme d'accumulateurs pour sélectionner les données de sortie dans la suite du traitement des données.

9. Méthode de gestion selon l'une des revendications précédentes, comprenant également une étape de synchronisation sous forme de compteurs programmables permettant de commander séquentiellement la réalisation des calculs par des boucles ou des adressages séquentiels, quel que soit le stade de traitement des données.

10. Méthode de gestion selon l'une des revendications précédentes, comprenant également des éléments d'affectation contenus dans les cellules pour attribuer des liens de données, lesquels liens sont internes ou externes aux cellules.

11. Méthode de gestion selon la revendication 7, comprenant également une étape de sélection de provenance des entrées des opérateurs notamment des fonctions arithmétiques, logiques, mémoires, laquelle sélection permet d'acheminer des sorties d'autres éléments que ce soit d'autres opérateurs, des cellules, des blocs, des compteurs programmables ou d'autres éléments, des données d'entrées vers l'une ou l'autre entrée de chaque opérateur et ce de manière indépendante pour chaque entrée de chaque opérateur.

12. Méthode de gestion selon l'une des revendications précédentes, comprenant également une étape de sélection de provenance des entrées des cellules, laquelle sélection permet d'acheminer des sorties d'autres éléments que ce soit, des cellules, des blocs ou d'accumulateurs sélectifs de blocs, des compteurs programmables, d' opérateurs ou d'autres éléments, des données d'entrées vers l'une ou l'autre entrée de chaque cellule et ce de manière indépendante pour chaque entrée de chaque cellule.

13. Méthode de gestion selon l'une des revendications précédentes, comprenant également une étape de sélection de provenance des entrées des blocs de cellules nommément des blocs de niveau 1 ou des blocs de niveaux supérieurs incorporant des blocs de niveau inférieur, laquelle sélection permet d'acheminer des sorties d'autres éléments que ce soit, des cellules, des blocs ou d'accumulateurs sélectifs de regroupement, des compteurs programmables, d'opérateurs ou d'autres éléments, des données directes vers l'une ou autre entrée de chaque bloc et ce de manière indépendante pour chaque entrée de chaque bloc.

14. Méthode de gestion selon l'une des revendications précédentes, comprenant également une étape de groupement des éléments de calculs ou de traitement comprenant :
- des opérateurs arithmétiques, logiques ou des mémoires ;
- un dispositif de sélection des liens entre les éléments de la cellule sur les entrées et sorties ;
- un dispositif de sélection des liens externes à la cellule permettant de relier différentes entrées ou sorties de cellules, d'opérateurs, d'accumulateurs de cellules, de groupes de cellules ou de données d'entrées.

15. Méthode de gestion selon l'une des revendications précédentes, comprenant également une étape de commande de processus des cellules comprenant :
- des compteurs programmables ;
- des commandes de compteurs pour les valeurs de départ, de fin et d'incrémentation/décrémentation ;
- des commandes de compteurs pour l'activation du comptage, la mise à zéro, le chargement des valeurs de programmation et la direction de comptage ;

16. Méthode de gestion selon l'une des revendications précédentes, comprenant également une étape d'accumulation sélective des entrées des cellules comprenant:
- des sorties d'éléments à sélectionner dont des sorties d'autres cellules, des sorties de groupes de cellules, des sorties d'accumulateurs de groupes de cellules, des sorties d'opérateurs et autres ;
- un dispositif de sélection des entrées à partir de registres programmés ou de machines à états programmées, ou autres.

17. Méthode de gestion selon l'une des revendications précédentes, comprenant également une étape de regroupement de cellules permettant de grouper des cellules comprenant :
- des opérateurs arithmétiques, logiques ou des mémoires disponibles pour recevoir des données de cellules ou d'autres provenances, calculer et acheminer des résultats à d'autres cellules;
- un dispositif de sélection des liens entre les cellules sur les entrées et sorties ;
- un dispositif de sélection des liens externes au groupe permettant de relier différentes entrées ou sorties de cellules, d'opérateurs, d'accumulateurs de cellules, de groupes de cellules ou de données d'entrées.

18. Méthode de gestion selon l'une des revendications précédentes, comprenant également une étape de commande de processus des regroupements de cellules comprenant:
- des compteurs programmables ;
- des commandes de compteurs pour les valeurs de départ, de fin et d'incrémentation/décrémentation ;
- des commandes de compteurs pour l'activation du comptage, la mise à zéro, le chargement des valeurs de programmation et la direction de comptage.

19. Méthode de gestion selon l'une des revendications précédentes, comprenant également une étape d'accumulation sélective des sorties des cellules comprenant:
- des sorties de cellules mémorisées ;
- un dispositif de sélection programmable permettant de choisir les valeurs de cellules à additionner sur un cycle d'horloge donné ;
- un dispositif de commande de sélection des valeurs à partir de compteurs ou de machines à états programmables faisant la commande du dispositif de sélection des cellules à additionner sur un cycle donné ;
- un dispositif de sélection programmable permettant de choisir les accumulateurs de cellules sur un cycle d'horloge donné ;
- un dispositif de commande de sélection des valeurs à partir de compteurs ou de machines à états programmables faisant la commande du dispositif de sélection des accumulateurs sur un cycle donné ;
- un additionneur parallèle des valeurs des cellules avec sélection des entrées par le dispositif de sélection des sorties de cellules à additionner sur un cycle choisi;
- des mémoires commandées sélectivement pour prendre les valeurs additionnées sur un cycle choisi ;
- des mémoires commandées cycliquement permettant de synchroniser les sorties des mémoires sélectionnées sur des cycles choisis et transmis sur d'autres cycles.

20. Un système de processeur modulaire ledit processeur gérant différentes données afin d'obtenir des résultats, lesdites données étant traitées par des éléments situés sur différents niveaux hiérarchiques et organisés selon une architecture flexible, lesdits éléments comprenant :
- des opérateurs situés sur le niveau de base, lesdits opérateurs comprenant des fonctions de nature logique ou arithmétique ou d'opérateur non-linéaire ou comparateur ou de mémorisation;
- des cellules situées sur le niveau intermédiaire lesdites cellules transmettant les données en provenance des opérateurs ou vers les opérateurs ;
- des blocs situés sur le niveau supérieur et constitués de regroupements de cellules, lesdits blocs comprenant une machine à état de niveau inférieur transmettant les résultats en provenance des cellules ;
**caractérisé en ce que** ledit système de processeur est adapté pour réaliser les étapes de la méthode selon l'une quelconque des revendications précédentes.

## Claims

1. A method of managing the resources of a modular processor system, said processor managing various data in order to obtain results, said data being processed by elements situated on various hierarchical levels and organised in a flexible architecture, said elements including:
- operators situated on the base level, said operators including logic, arithmetic, non-linear operator, comparator or storage functions;
- cells situated on the intermediate level, said cells transmitting the data from the operators or to the operators;
- blocks situated on the higher level and constituted of groups of cells, said blocks including a lower level state machine transmitting the results from the cells;
**characterised in that** said method includes the steps of:
- transmitting an instruction of a program contained in a first higher level state machine to the lower level state machine in order to manage the execution of the program;
- allocating links between the various cells that contain the incoming data and the operators of the block of the lower level state machine to effect the placement of said incoming data;
- allocating links between the operators of a block of the lower level state machine for effecting the processing of said incoming data;
- allocating links between the various operators via the lower level state machine, during the execution of the instructions of the program, as a function of the outgoing data obtained from the processing of the incoming data,
- giving orders to the lower level state machine via the higher level state machine, by the output values of the cells and by the outputs of a process controller, this process controller being constituted by programmable counters that can selectively direct the results as required.

2. The managing method according to Claim 1, further including a step of routing the input and output data dynamically and independently to each input, output and operator and on the basis of determined values in predefined memories corresponding to the links between the sources and the destinations.

3. The managing method according to claim 1 or 2, further including a step of transmitting the incoming data directed dynamically to the groups of operators from an external processor or input interfaces from external devices, the routing of the data to the groups of operators being able to be reconfigured dynamically as required.

4. The managing method according to one of the preceding claims, further including a step of transmitting the outgoing data to memories or external devices or output interfaces.

5. The managing method according to one of the preceding claims, further including a step of configuring the inputs of the various logic and arithmetic operators grouped into blocks, shared between cells and accessible to cells chosen dynamically.

6. The managing method according to one of the preceding claims, further including a step of configuring the inputs of the various logic and arithmetic operators partly assigned to cells according to the configuration requirements.

7. The managing method according to one of the preceding claims, further including a step of selecting the source of each input for each input of each operator.

8. The managing method according to one of the preceding claims, further including a step of capturing output data of cells as accumulators in order to select the output data in the remainder of the processing of the data.

9. The managing method according to one of the preceding claims, further including a step of synchronising as programmable counters for enabling the sequential control of the execution of the calculations by loops or sequential addressing, regardless of the stage of processing of the data.

10. The managing method according to one of the preceding claims, further including allocation elements contained in the cells for assigning data links, which links being internal or external to the cells.

11. The managing method according to claim 7, further including a step of selecting the source of the operator inputs in particular the arithmetic, logic, storage functions, which selection enables the routing of the outputs of other elements whether they be other operators, cells, blocks, programmable counters or other elements, input data to one or the other input of each operator, and does this independently for each input of each operator.

12. The managing method according to one of the preceding claims, further including a step of selecting the source of the cell inputs, which selection enables the routing of the outputs of other elements whether they be cells, blocks or block selecting accumulators, programmable counters, operators or other elements, input data to one or the other input of each cell, and this independently for each input of each cell.

13. The managing method according to one of the preceding claims, further including a step of selecting the source of the inputs of blocks of cells namely level 1 blocks or higher level blocks incorporating lower level blocks, which selection routes outputs of other elements whether that be cells, blocks or selective accumulators of groups, programmable counters, operators or other elements, direct data to one or the other input of each block, and this independently for each input of each block.

14. The managing method according to one of the preceding claims, further including a step of grouping calculation or processing elements including:
- arithmetic, logic operators or memories;
- a device for selecting links between the elements of the cell at the inputs and outputs;
- a device for selecting links external to the cell enabling the connection of different inputs or outputs of cells, operators, accumulators of cells, groups of cells or input data.

15. The managing method according to one of the preceding claims, further including a cell process control step including:
- programmable counters;
- counter controls for the start, end and incrementation/decrementation values;
- counter controls for activation of counting, resetting, loading of programming values and counting direction.

16. The managing method according to one of the preceding claims, further including a step of selective accumulation of the inputs of the cells including:
- outputs of elements to be selected, including outputs of other cells, outputs of groups of cells, outputs of accumulators of groups of cells, outputs of operators, and others;
- a device for selecting inputs from programmed registers or programmed state machines, or others.

17. The managing method according to one of the preceding claims, further including a cell grouping step enabling the grouping of cells including:
- logic or arithmetic operators or memories available to receive data from cells or from other sources, calculate and route results to other cells;
- a device for selecting links between the cells at the inputs and outputs;
- a device for selecting links external to the group enabling the connection of various inputs or outputs of cells, operators, accumulators of cells, groups of cells or input data.

18. The managing method according to one of the preceding claims, further including a cell group process control step including:
- programmable counters;
- counter controls for the start, end and incrementation/decrementation values;
- counter controls for activation of counting, setting to zero, loading programming values and counting direction.

19. The managing method according to one of the preceding claims, further including a step of selective accumulation of the outputs of the cells including:
- stored cell outputs;
- a programmable selection device which enables the choosing of the values of cells to be added over a given clock cycle;
- a device for controlling selection of values from counters or programmable state machines that controls the device for selecting cells to be added over a given cycle;
- a programmable selection device enabling the choosing of the cell accumulators over a given clock cycle;
- a device for controlling the selection of values from counters or programmable state machines controlling the device for selecting the accumulators over a given cycle;
- a parallel adder of the values of the cells with selection of the inputs by the device for selecting the outputs of cells to be added over a given cycle;
- memories which are selectively controlled to take the values added on a chosen cycle;
- memories which are cyclically controlled enabling the synchronisation of the outputs of the memories selected over chosen cycles and transmitted over other cycles.

20. A modular processor system, said processor managing various data in order to obtain results, said data being processed by elements situated on various hierarchical levels and organised in a flexible architecture, said elements including:
- operators situated on the base level, said operators including logic, arithmetic, non-linear operator, comparator or storage functions;
- cells situated on the intermediate level, said cells transmitting the data from the operators or to the operators;
- blocks situated on the higher level and constituted of groups of cells, said blocks including a lower level state machine transmitting the results from the cells;
**characterised in that** said processor system is adapted to implement the steps of the method according to any one of the preceding claims.

## Patentansprüche

1. Verfahren zur Verwaltung von Ressourcen eines modularen Prozessorsystems, wobei der Prozessor unterschiedliche Daten verwaltet, um Ergebnisse zu erhalten, wobei die Daten von Elementen verarbeitet werden, die sich auf unterschiedlichen hierarchischen Ebenen befinden und gemäß einer flexiblen Architektur organisiert sind, wobei die Elemente Folgendes umfassen:
- Operatoren, die sich auf der Basisebene befinden, wobei die Operatoren logische oder arithmetische Funktionen oder Funktionen von einem nichtlinearen oder Vergleichs- oder Speicheroperator umfassen;
- Zellen, die sich auf der Zwischenebene befinden, wobei die Zellen die Daten aus den Operatoren oder an die Operatoren übertragen;
- Blöcke, die sich auf der oberen Ebene befinden und aus Zellgruppierungen bestehen, wobei die Blöcke eine Zustandsmaschine auf der unteren Ebene umfassen und die Ergebnisse aus den Zellen übertragen;
**dadurch gekennzeichnet, dass** das Verfahren die folgenden Schritte umfasst:
- Übertragung einer Anweisung eines in der ersten Zustandsmaschine auf der oberen Ebene enthaltenen Programms an die Zustandsmaschine auf der unteren Ebene, um den Ablauf des Programms zu verwalten;
- Zuordnung von Verbindungen zwischen den unterschiedlichen Zellen, die die eingehenden Daten und die Blockoperatoren der Zustandsmaschine auf der unteren Ebene enthalten, um die Aufstellung der eingehenden Daten umzusetzen;
- Zuordnung von Verbindungen zwischen den Operatoren eines Blocks der Zustandsmaschine auf der unteren Ebene, um die Verarbeitung der eingehenden Daten umzusetzen;
- Zuordnung von Verbindungen zwischen den unterschiedlichen Operatoren durch die Zustandsmaschine auf der unteren Ebene bei dem Ablauf der Anweisungen des Programms entsprechend den ausgehenden Daten, die sich aus der Verarbeitung der eingehenden Daten ergeben,
- Erteilung von Befehlen gegenüber der Zustandsmaschine auf der unteren Ebene durch die Zustandsmaschine auf der oberen Ebene durch die Ausgangswerte der Zellen und durch die Ausgänge einer Vorgangssteuerung, wobei die Vorgangssteuerung aus programmierbaren Zählern, die bei Bedarf und selektiv die Ergebnisse lenken können, besteht.

2. Verfahren zur Verwaltung gemäß Anspruch 1, das ferner einen Schritt des dynamischen und unabhängigen Weiterleitens der Eingangs- und Ausgangsdaten bei jedem Eingang, Ausgang und Operator und dies bei bestimmten Werten in vorbestimmten Speichern, die den Verbindungen zwischen den Quellen und den Zielen entsprechen, umfasst.

3. Verfahren zur Verwaltung gemäß Anspruch 1 oder 2, das ferner einen Schritt der Übertragung der dynamisch gelenkten eingehenden Daten an die Gruppen von Operatoren aus einem externen Prozessor oder von Eingangsschnittstellen aus externen Vorrichtungen umfasst, wobei das Weiterleiten der Daten an die Gruppen von Operatoren nach Bedarf dynamisch rekonfiguriert werden kann.

4. Verfahren zur Verwaltung gemäß einem der vorhergehenden Ansprüche, das ferner einen Schritt der Übertragung der ausgehenden Daten an Speicher oder externe Vorrichtungen oder Ausgangsschnittstellen umfasst.

5. Verfahren zur Verwaltung gemäß einem der vorhergehenden Ansprüche, das ferner einen Schritt der Konfiguration von Eingängen von unterschiedlichen logischen und arithmetischen Operatoren, die in Blöcken gruppiert, auf Zellen aufgeteilt und auf ausgewählten Zellen dynamisch zugänglich sind, umfasst.

6. Verfahren zur Verwaltung gemäß einem der vorhergehenden Ansprüche, das ferner einen Schritt der Konfiguration von Eingängen von unterschiedlichen logischen und arithmetischen Operatoren, die je nach Konfigurationsbedarf zum Teil Zellen zugewiesen sind, umfasst.

7. Verfahren zur Verwaltung gemäß einem der vorhergehenden Ansprüche, das ferner einen Schritt der Auswahl der Herkunft jedes Eingangs für jeden Eingang jedes Operators umfasst.

8. Verfahren zur Verwaltung gemäß einem der vorhergehenden Ansprüche, das ferner einen Schritt der Zellenausgangsdatenerfassung in Form von Akkumulatoren zum Auswählen der Ausgangsdaten in der weiteren Datenverarbeitung umfasst.

9. Verfahren zur Verwaltung gemäß einem der vorhergehenden Ansprüche, das ferner einen Schritt der Synchronisation in Form programmierbarer Zähler umfasst, welche die Umsetzung der Berechnungen durch sequentielle Schleifen oder Adressierungen sequentiell steuern, und dies ungeachtet der Datenverarbeitungsphase.

10. Verfahren zur Verwaltung gemäß einem der vorhergehenden Ansprüche, das ferner in den Zellen enthaltene Zuweisungselemente zum Zuordnen von Datenverbindungen umfasst, wobei sich die Datenverbindungen innerhalb oder außerhalb der Zellen befinden.

11. Verfahren zur Verwaltung gemäß Anspruch 7, das ferner einen Schritt der Auswahl der Herkunft der Eingänge der Operatoren, insbesondere arithmetischer Funktionen, logischer Funktionen, Speicherfunktionen, umfasst, wobei die Auswahl erlaubt, Ausgänge anderer Elemente, sei es von anderen Operatoren, Zellen, Blöcken, programmierbaren Zählern oder anderen Elementen, Eingangsdaten an den einen oder anderen Eingang jedes Operators, für jeden Eingang jedes Operators unabhängig, weiterzuleiten.

12. Verfahren zur Verwaltung gemäß einem der vorhergehenden Ansprüche, das ferner einen Schritt der Auswahl der Herkunft der Eingänge der Zellen umfasst, wobei die Auswahl erlaubt, Ausgänge anderer Elemente, sei es von Zellen, Blöcken oder selektiven Blockakkumulatoren, programmierbaren Zählern, Operatoren oder anderen Elementen, Eingangsdaten an den einen oder anderen Eingang jeder Zelle, für jeden Eingang jeder Zelle unabhängig, weiterzuleiten.

13. Verfahren zur Verwaltung gemäß einem der vorhergehenden Ansprüche, das ferner einen Schritt der Auswahl der Herkunft der Eingänge der Zellblöcke, insbesondere der Blöcke aus Ebene 1 oder der Blöcke aus oberen Ebenen, welche Blöcke der unteren Ebene inkorporieren, umfasst, wobei die Auswahl erlaubt, Ausgänge anderer Elemente, sei es von Zellen, Blöcken oder selektiven Gruppierungsakkumulatoren, programmierbaren Zählern, Operatoren oder anderen Elementen, direkten Eingangsdaten an den einen oder anderen Eingang jedes Blocks, für jeden Eingang jedes Blocks unabhängig, weiterzuleiten.

14. Verfahren zur Verwaltung gemäß einem der vorhergehenden Ansprüche, das ferner einen Schritt der Gruppierung von Berechnungs- oder Verarbeitungselementen umfasst, umfassend:
- arithmetische, logische oder Speicheroperatoren;
- eine Vorrichtung zur Auswahl von Verbindungen zwischen den Zellelementen über den Eingängen und Ausgängen;
- eine Vorrichtung zur Auswahl von Verbindungen außerhalb der Zelle, was erlaubt, unterschiedliche Eingänge oder Ausgänge von Zellen, Operatoren, Zellakkumulatoren, Zellgruppen oder Eingangsdaten zu verbinden.

15. Verfahren zur Verwaltung gemäß einem der vorhergehenden Ansprüche, das ferner einen Schritt der Steuerung des Vorgangs der Zellen umfasst, umfassend:
- programmierbare Zähler;
- Zählersteuerungen für die Ausgangswerte, Endwerte und Inkrement-/Dekrementwerte;
- Zählersteuerungen zur Aktivierung der Zählung, der Nullung, des Ladens der Programmierungswerte und der Zählungslenkung.

16. Verfahren zur Verwaltung gemäß einem der vorhergehenden Ansprüche, das ferner einen Schritt der selektiven Akkumulierung der Eingänge der Zellen umfasst, umfassend:
- Ausgänge von auszuwählenden Elementen, darunter Ausgänge anderer Zellen, Ausgänge von Zellgruppen, Ausgänge von Zellgruppenakkumulatoren, Operatorausgänge und andere;
- eine Eingangsauswahlvorrichtung aus programmierten Registern oder programmierten Zustandsmaschinen oder anderen.

17. Verfahren zur Verwaltung gemäß einem der vorhergehenden Ansprüche, das ferner einen Schritt der Gruppierung von Zellen umfasst, was erlaubt, die Zellen zu gruppieren, umfassend:
- arithmetische, logische oder verfügbare Speicheroperatoren, um Zelldaten oder andere Daten anderer Herkunft zu empfangen, die Ergebnisse zu berechnen und an andere Zellen weiterzuleiten;
- eine Vorrichtung zur Auswahl von Verbindungen zwischen den Zellen über den Eingängen und Ausgängen;
- eine Vorrichtung zur Auswahl von Verbindungen außerhalb der Gruppen, was erlaubt, unterschiedliche Eingänge oder Ausgänge von Zellen, Operatoren, Zellakkumulatoren, Zellgruppen oder Eingangsdaten zu verbinden.

18. Verfahren zur Verwaltung gemäß einem der vorhergehenden Ansprüche, das ferner einen Schritt der Steuerung des Vorgangs der Gruppierungen von Zellen umfasst, umfassend:
- programmierbare Zähler;
- Zählersteuerungen für die Ausgangswerte, Endwerte und Inkrement-/Dekrementwerte;
- Zählersteuerungen zur Aktivierung der Zählung, der Nullung, des Ladens der Programmierungswerte und der Zählungslenkung.

19. Verfahren zur Verwaltung gemäß einem der vorhergehenden Ansprüche, das ferner einen Schritt der selektiven Akkumulierung der Ausgänge der Zellen umfasst, umfassend:
- Ausgänge gespeicherter Zellen;
- eine programmierbare Auswahlvorrichtung, die das Auswählen der in einem gegebenen Taktzyklus zu addierenden Zellwerte erlaubt;
- eine Vorrichtung zur Steuerung der Auswahl der Werte aus programmierbaren Zählern oder Zustandsmaschinen, wobei die Vorrichtung zur Auswahl der Zellen zur Addition in einem gegebenen Zyklus gesteuert wird;
- eine programmierbare Auswahlvorrichtung, die erlaubt, die Zellakkumulatoren in einem gegebenen Taktzyklus zu wählen;
- eine Vorrichtung zur Steuerung der Auswahl der Werte aus programmierbaren Zählern oder Zustandsmaschinen, wobei die Vorrichtung zur Auswahl der Akkumulatoren in einem gegebenen Zyklus gesteuert wird;
- ein paralleler Zellwertaddierer mit Auswahl von Eingängen durch die Vorrichtung zur Auswahl der zu addierenden Zellausgänge in einem gewählten Zyklus;
- selektiv gesteuerte Speicher, um die addierten Werte in einem gewählten Zyklus zu erfassen;
- zyklisch gesteuerte Speicher, die erlauben, die Ausgänge der in den gewählten und an andere Zyklen übertragenen Zyklen ausgewählten Speicher zu synchronisieren.

20. Ein modulares Prozessorsystems, wobei der Prozessor unterschiedliche Daten verwaltet, um Ergebnisse zu erhalten, wobei die Daten von Elementen verarbeitet werden, die sich auf unterschiedlichen hierarchischen Ebenen befinden und gemäß einer flexiblen Architektur organisiert sind, wobei die Elemente Folgendes umfassen:
- Operatoren, die sich auf der Basisebene befinden, wobei die Operatoren logische oder arithmetische Funktionen oder Funktionen von einem nichtlinearen oder Vergleichs- oder Speicheroperator umfassen;
- Zellen, die sich auf der Zwischenebene befinden, wobei die Zellen die Daten aus den Operatoren oder an die Operatoren übertragen;
- Blöcke, die sich in der oberen Ebene befinden und aus Zellgruppierungen bestehen, wobei die Blöcke eine Zustandsmaschine auf der unteren Ebene umfassen und die Ergebnisse aus den Zellen übertragen;
**dadurch gekennzeichnet, dass** das Prozessorsystem angepasst ist, um die Schritte des Verfahrens gemäß einem der vorhergehenden Ansprüche umzusetzen.
